# DEMANDE DE BREVET EUROPEEN

(11) **EP 0 864 740 A1**
(43) Date de publication de la demande: **16.09.1998**
(21) Numéro de dépôt: 98400581.9
(22) Date de dépôt: 12.03.1998
(51) Int. Cl.: F02K 1/70

(54) **Inverseur de poussée de turboréacteur à portes à structure externe plaquée par un ressort**

(30) Priorité: 13.03.1997 FR 9702982
(71) Demandeur: Hispano-Suiza Aerostructures, 75015 Paris (FR)
(72) Inventeur: Gonidec, Patrick, 76290 Montivilliers (FR); Rouyer, Pascal Gérard, 76420 Saint Aubin Routot (FR); Vauchel, Guy Bernard, 76610 Le Havre (FR)

(57) **Abrégé**

Un inverseur de poussée de turboréacteur à double flux comporte des portes pivotantes (7) intégrées en jet direct dans la paroi extérieure du conduit (15) du flux de soufflante et constituant des obstacles de déviation après pivotement en procurant une inversion de poussée. Une porte (7) est constituée d'un panneau (23) formant la structure externe et d'une structure interne (22) qui sont mécaniquement dissociées et reliées par une jonction formée d'au moins une liaison élastique (25,26).

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

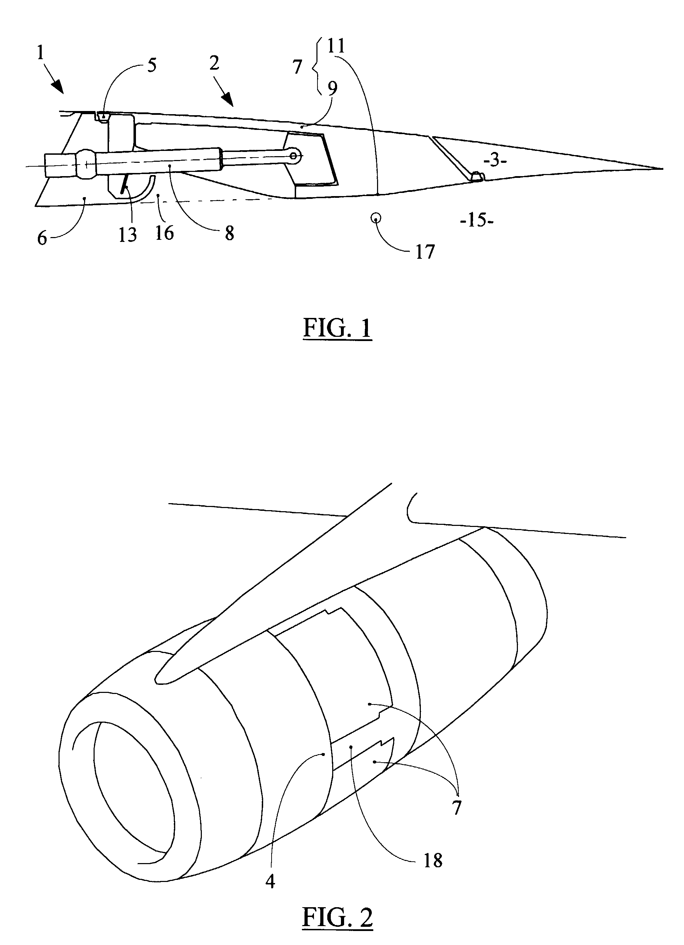

La figure 1 des dessins joints montre un exemple connu de réalisation d'un inverseur de poussée de ce type, appliqué comme le montre la vue schématique en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur, en amont des portes, par une partie amont 1 puis en aval des portes, par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots 17, vient obstruer plus ou moins totalement le conduit 15, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.
Dans le type d'inverseur décrit ci-dessus, les portes sont toujours réalisées monobloc c'est à dire que la structure externe est liée structuralement à la structure interne. L'étanchéité est réalisée sur les parois latérales de liaison de ces deux structures.

Le problème généralement rencontré est dû aux chargements aérodynamiques dans la majorité des cas de vol. La pression du flux circulant dans le canal annulaire 15 est presque toujours supérieure à la pression ambiante à l'extérieur de la nacelle. Ceci à pour conséquence, suivant la technologie de fabrication des portes retenue, de générer des efforts sur la structure même des portes impliquant des déformations géométriques.
Ces déformations créent des écarts dans les lignes et des marches, entre la structure fixe et l'externe porte, néfastes pour les performances aérodynamiques recherchées.

Un des buts de l'invention est d'éviter ces inconvénients des solutions connues antérieures. Un inverseur de poussée de turboréacteur répondant à ces conditions est caractérisé en ce que la porte est constituée d'une structure externe formée d'un panneau et d'une structure interne qui sont mécaniquement dissociées et reliées par une jonction formée d'au moins une liaison élastique, les joints d'étanchéité de bord de porte étant solidarisés uniquement à la structure interne.

D'autres caractéristiques et avantages de l'invention seront mieux compris à la lecture de la description qui va suivre des modes de réalisation de l'invention en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes en position fermées, d'un type connu et qui a fait précédemment l'objet d'une description ;
- la figure 2 représente une vue schématique en perspective d'une nacelle comportant un inverseur de poussée du type précité montré en position monté et avec les portes fermées ;
- la figure 3 représente dans une vue analogue à la figure 1, l'inverseur de poussée en position jet direct d'un mode de l'invention ;
- la figure 4 représente le principe défini dans la figure 3 dans une phase intermédiaire d'ouverture de la porte ;
- la figure 5 représente un autre mode de réalisation de l'invention en position jet direct ;
- la figure 6 représente le mode de l'invention défini dans la figure 5 dans une phase intermédiaire d'ouverture de la porte ;
- la figure 7 représente un autre mode de réalisation de l'invention en position jet direct ;
- la figure 8 représente un mode de centrage du panneau externe.

La présente invention s'applique à tout ensemble mobile d'une nacelle, articulé ou non, susceptible de recevoir une pression sur une de ses faces plus importante que sur une autre et impliquant une déformation structurale de l'ensemble.

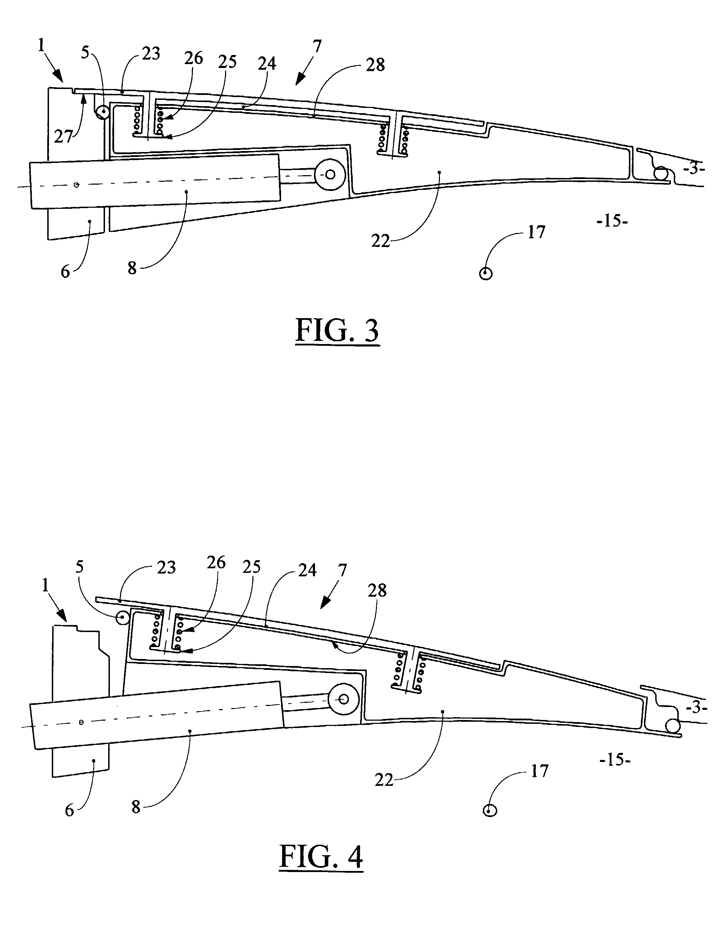

La figure 3 montre un mode de réalisation de l'invention appliquée à une porte 7 d'inverseur de poussée. La structure interne 22 de la porte 7 supporte l'étanchéité 5. Cette disposition a pour objet d'isoler le panneau externe 23 de tout effort résultant, généré par le flux circulant dans le canal annulaire 15 sur la structure interne 22.

Le panneau externe 23 comporte une pluralité de liaisons élastiques réalisées en exemple par un ensemble de guide 25 et de ressort 26. Ces ensembles élastiques sont disposés à tout endroit jugé nécessaire par l'homme de l'art pour réaliser les performances structurales et aérodynamiques recherchées du panneau externe 23.

Ce peut être en périphérie de la structure de la porte 7 et/ou réparti sur la surface externe 28 de la structure interne 22.
En position jet direct un espace 24, entre l'interne du panneau externe 23 et l'externe 28 de la structure interne 22, est ménagé.
Est appelé "liaison élastique", tout système mécanique ou autre liant la structure interne 22 de la port 7 au panneau externe 23 et permettant un déplacement relatif de l'un par rapport à l'autre. Une liaison entre les deux éléments réalisée par un matériau élastomère vulcanisé soit rapporté ou appliqué directement sur lesdits éléments est aussi possible.
Le panneau externe peut réaliser tout ou une partie de la surface externe de la porte 7 et forme une partie de la surface externe de la nacelle. Il peut être réalisé en une seule partie ou en plusieurs. Les extrémités du panneau externe 23 en contact avec la structure fixe 1 peuvent être souples, de formes concave, convexe ou autre par rapport à l'interface 27, rapportés ou non. L'ensemble du panneau peut être au contraire auto raidi et réalisé avec n'importe quel matériau aéronautique voire en matériau thermoplastique.

Selon la figure 4, quant la porte 7 n'est pas encore entièrement fermée, le panneau externe 23 peut combler tout ou une partie de l'espace 24. Dans ce cas les ressorts 26 se trouvent dans une phase de travail minimum.

En phase de fin de fermeture des portes 7, les bords internes du panneau externe 23 viennent en contact en premier avec la structure fixe 1 sur un contact continu 27 ou une pluralité de contacts ponctuels selon la nécessité. Le contact 27 peut être réalisé seulement sur la zone amont de la porte 7 et/ou sur les bords latéraux de la porte sur une longueur déterminée par l'homme de métier.

Dans ce concept, la déformation de la structure interne 22 de la porte 7 due à la pression circulant dans le canal annulaire 15 n'a pas d'effet sur la structure et la tenue en place du panneau externe 23 de la porte 7. Les écarts de cotes étant repris par les systèmes élastiques 25, 26.

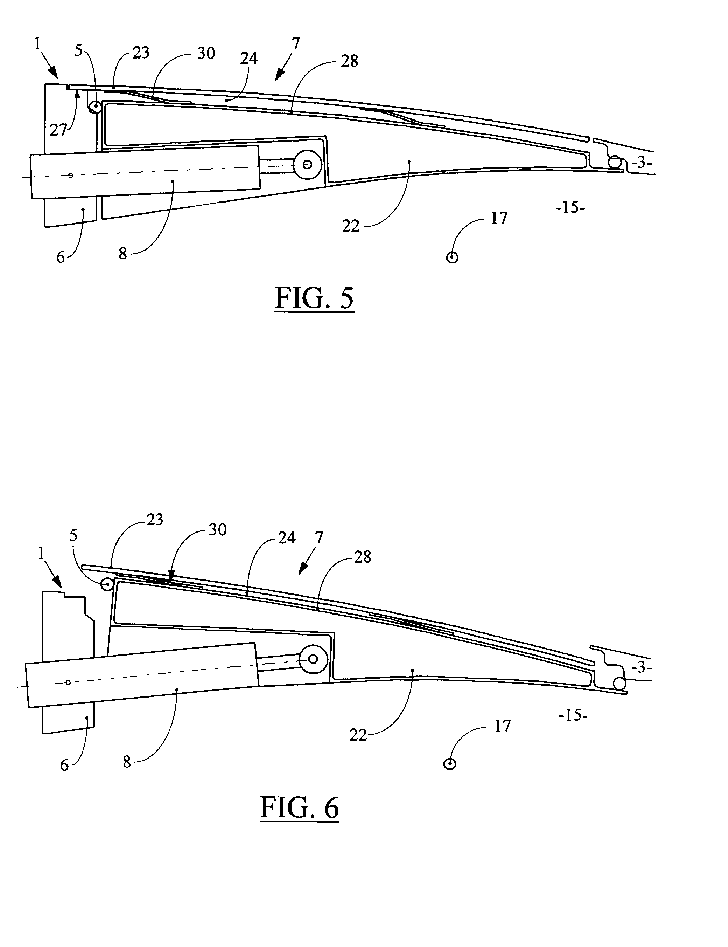

Selon les figures 5 et 6, un second exemple de liaison élastique entre le panneau externe 23 et la structure interne 22 de porte 7 est montré. Dans ce cas des ressorts à lames 30 relient les deux éléments entre-eux.

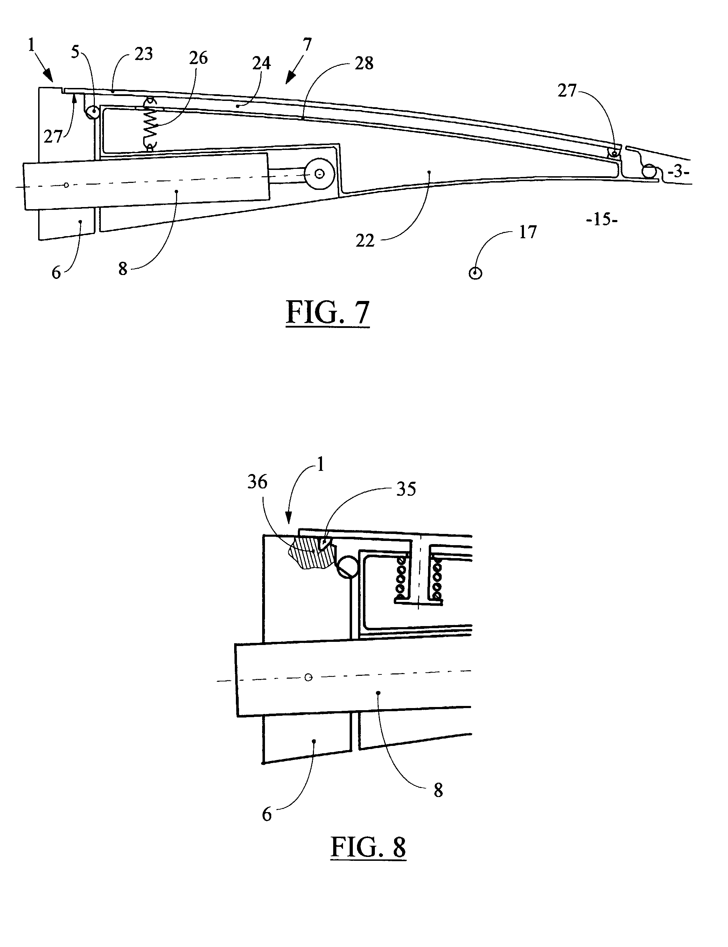

La figure 7 représente une autre variante d'installation du panneau externe 23. Le panneau externe 23 est articulé en aval par un pivot 27 lié à la structure interne 22 de la porte 7. Le système pivot est de type connu, il est situé soit en partie latérale, en une zone locale ou également réparti entre les deux bords latéraux dudit panneau. Un ou une pluralité d'éléments élastiques 26 donnent une composante de pivotement de l'amont du panneau externe 23 vers l'interne nacelle. Pour cette variante tous les paramètres définis précédemment sont applicables.

La figure 8 montre un exemple schématique de centrage du panneau externe 23 en 35 sur la structure fixe 1 en 36. Ceci permet un positionnement précis du panneau et évite toute possibilité de déplacements parasites dudit panneau. Ces centrages sont de forme, de technologie et de positionnement adaptés selon les besoins et les connaissances de l'homme de métier.

## Revendications

1. Inverseur de poussée de turboréacteur à double flux comportant des portes pivotantes (7) susceptibles en position fermée, lors d'un fonctionnement en jet direct, de s'intégrer dans la paroi extérieure du conduit (15) de flux en arrière de la soufflante de turboréacteur, et susceptibles en outre chacune de pivoter sous l'action d'un moyen (8) de commande des déplacements de manière à constituer des obstacles de déviation de flux lors d'un fonctionnement en inversion de poussée caractérisé en ce que la porte (7) est constituée d'une structure externe formée d'un panneau (23) et d'une structure interne (22) qui sont mécaniquement dissociées et reliées par une jonction formée d'au moins une liaison élastique (25, 26 ; 30), les joints d'étanchéité (5) de bord de porte (7) étant solidarisés uniquement à la structure interne (22).

2. Inverseur de poussée de turboréacteur selon la revendication 1 caractérisé en ce qu'une pluralité de liaisons élastiques entre structure interne et panneau externe sont réalisées par ressort de traction (26) associé à un guide (25).

3. Inverseur de poussée de turboréacteur selon la revendication 1 caractérisé en ce qu'une pluralité de liaisons élastiques entre structure interne et panneau externe sont réalisées par ressort de compression.

4. Inverseur de poussée de turboréacteur selon la revendication 1 caractérisé en ce qu'une pluralité de liaisons élastiques entre structure interne et panneau externe sont réalisées par ressort à lame (30).

5. Inverseur de poussée de turboréacteur selon la revendication 1 caractérisé en ce que la liaison élastique entre structure interne et panneau externe est réalisée par élément en matériau élastomère.

6. Inverseur de poussée de turboréacteur selon la revendication 1 caractérisé en ce que le panneau externe (23) est articulé à son extrémité aval par un pivot (27) lié à la structure interne (22) de la porte (7), ladite liaison élastique (26) étant disposée dans la zone amont.

7. Inverseur de poussée de turboréacteur selon l'une quelconque des revendications 1 à 6 caractérisé en ce qu'un dispositif de recentrage (35) est placé entre la structure fixe amont (1) et l'extrémité amont du panneau externe (23).
